# FASCICULE DE BREVET EUROPEEN

(11) **EP 1 547 734 B1**
(45) Date de publication et mention de la délivrance du brevet: **25.08.2010**
(21) Numéro de dépôt: 04292840.8
(22) Date de dépôt: 01.12.2004
(51) Int. Cl.: B26B 3/00

(54) **Procédé de réalisation d'un couteau à mitre en aluminium surmoulée et dispositif de mise en oeuvre d'un tel procédé**
Verfahren zur Herstellung eines Messers mit Kropf aus Aluminiumguss und Vorrichtung zur Durchführung eines derartigen Verfahrens
Method for manufacturing a knife with cast aluminium bolster, and device for implementing such a method

(30) Priorité: 22.12.2003 FR 0315143
(43) Date de publication de la demande: 29.06.2005
(73) Titulaire: ADIAMAS, FR-63550 Palladuc (FR)
(72) Inventeur: Janvier Patrick, 63190 Lezoux (FR)
(74) Mandataire: Orsini, Fabienne

(56) Documents cités:
- EP-A- 1 304 198
- DE-A- 3 721 647
- DE-A- 19 640 557
- DE-B- 1 114 312
- US-A- 2 228 385
- US-A- 5 210 925
- US-A1- 2002 083 598
- BOTHE, CARSTEN: "Das Messerbuch" 1999, VENATUS-VERLAGS-GMBH , BRAUNSCHWEIG , XP002316614 ISBN 3-932848-12-8 * page 27 - page 34 *
- DENNIS BEEVER: "A few notes on laser cutting" INTERNET ARTICLE, [Online] 25 juin 2003 (2003-06-25), XP002286001 Extrait de l'Internet: URL:http://web.archive.org/web/20030626105 329/www.throwzini.com/lasertemplates.html> [extrait le 2004-06-25]

## Description

La présente invention concerne de manière générale la fabrication de couteaux.

Elle concerne plus particulièrement un procédé de réalisation d'un couteau à mitre en aluminium surmoulée ainsi qu'un dispositif de mise en oeuvre d'un tel procédé.

### ARRIERE-PLAN TECHNOLOGIQUE

Actuellement on connaît un procédé de réalisation d'un couteau à mitre en aluminium qui comprend les étapes suivantes :
- on découpe mécaniquement la structure du couteau dans un feuillard en acier plat. La structure du couteau comprend la lame, la soie et la zone intermédiaire entre la soie et la lame qui reçoit la mitre ;
- on rectifie le dos de la structure découpée du couteau afin d'enlever la tranche de découpe ;
- on traite thermiquement la structure rectifiée afin d'augmenter la dureté de la lame ;
- on émoud la lame afin de lui donner son arête tranchante ;
- on surmoule la mitre en aluminium sur la structure émoulue ;
- on assemble au moyen de rivets le manche du couteau à la soie ;
- on finit le couteau en polissant et en rayassant la lame, en polissant et en émerisant la mitre et le manche ; et
- on réalise l'affilage de l'arête tranchante de la lame du couteau.

Un tel procédé est décrit notamment dans le document US 5 210 925. Selon ce document, on forge la structure du couteau, on traite thermiquement cette structure afin d'augmenter la dureté de la lame puis on émoud cette lame afin de lui donner son arête tranchante avant de surmouler la mitre en aluminium sur la structure émoulue.

Ce procédé présente cependant plusieurs inconvénients.

Il est long à mettre en oeuvre car il nécessite plusieurs opérations de reprise pour obtenir le couteau fini.

En particulier l'étape de découpage mécanique de la structure implique plusieurs étapes supplémentaires dont une étape de rectification du dos de la structure, une étape de reprise du pourtour inférieur de la soie du couteau après assemblage du manche qui est relativement longue et une étape de reprise manuelle du tranchant de la lame avant affilage.

Le coût de fabrication d'un couteau par un tel procédé est donc relativement élevé, bien qu'inférieur à celui d'un couteau forgé.

En outre, l'étape de surmoulage de la mitre sur la structure du couteau émoulue est une étape relativement délicate à mettre en oeuvre. L'opérateur qui manipule la structure émoulue à ce stade du procédé doit faire attention à ne pas se couper avec la lame tranchante, ce qui ralentit le procédé.

Enfin, l'aspect du couteau obtenu par ce procédé est très différent de celui d'un couteau forgé qui est un couteau haut de gamme fabriqué de manière traditionnel.

### OBJET DE L'INVENTION

Afin de remédier aux inconvénients précités de l'état de la technique, la présente invention propose un nouveau procédé de réalisation d'un couteau à mitre en aluminium surmoulée, qui permet de fabriquer des couteaux dont l'apparence est très proche de celle d'un couteau forgé, à un coût de revient inférieur à celui du procédé de fabrication précité.

Plus particulièrement selon le procédé conforme à l'invention, on surmoule la mitre en aluminium sur la structure du couteau non émoulue, puis on émoud ladite structure surmoulée pour réaliser l'arête tranchante de la lame du couteau.

Ainsi, l'étape de surmoulage peut être réalisée aisément par l'opérateur sans risque de se couper. En outre, avantageusement, lors de cette étape de surmoulage, on ferme le moule de surmoulage sur des surfaces planes de la structure dont l'épaisseur est constante. En conséquence, cela permet de réduire considérablement le phénomène de bavure de l'aluminium dans les zones de jonction entre la lame du couteau et la mitre.

Selon une caractéristique avantageuse du procédé conforme à l'invention, lors d'une première étape, on découpe au faisceau laser un feuillard pour réaliser la structure du couteau à savoir la soie, la zone recevant la mitre et la lame.

De cette manière, on obtient une tranche de découpe parfaite sur tout le pourtour de la structure du couteau et il n'est plus nécessaire d'effectuer une opération de reprise de ce pourtour (rectification du dos de la structure, reprise du pourtour inférieur de la soie et reprise de l'arête tranchante de la lame). Cela permet de réduire le temps de la phase de finition du couteau.

Selon une autre caractéristique avantageuse du procédé conforme à l'invention, il comporte une étape d'assemblage à chaud du manche et de la soie du couteau consistant à chauffer une extrémité de deux parties du manche sans chauffer la mitre dudit couteau et à presser lesdites parties du manche contre la soie de sorte que lesdites extrémités chauffées desdites parties du manche se collent contre la face arrière de la mitre du couteau non chauffée.

Ainsi, lors de cette étape, on fait fondre les extrémités concernées des parties du manche pour réaliser une jonction parfaite entre le manche et la mitre du couteau.

Selon un mode de réalisation du procédé conforme à l'invention, après avoir assemblé à chaud le manche et la soie du couteau, on solidarise, au travers de la soie, les deux parties du manche l'une à l'autre à l'aide de rivets.

Selon un autre mode de réalisation du procédé conforme à l'invention, préalablement à l'étape d'assemblage à chaud, on place dans une des deux parties du manche des éléments de rivets mâles et dans l'autre partie du manche des éléments de rivets femelles et, lorsque l'on presse lesdites parties de manche chauffées contre la soie dudit couteau, on assemble lesdits éléments de rivets mâles et femelles entre eux au travers de la soie pour solidariser les deux parties du manche l'une à l'autre.

Enfin avantageusement selon le procédé conforme à l'invention, lors de l'étape d'émoulage de la lame du couteau, on finalise la forme des oreilles de la mitre de sorte qu'elles se raccordent continûment par un arrondi à la lame du couteau.

De cette manière, on obtient un couteau dont l'aspect final est très proche de celui d'un couteau forgé.

L'invention concerne également un dispositif de mise en oeuvre du procédé précité qui comporte un poste de découpage comprenant un laser dont le faisceau est adapté à découper un feuillard selon un patron donné pour réaliser la structure du couteau.

Selon une caractéristique particulièrement avantageuse du dispositif conforme à l'invention, il comprend un poste d'assemblage à chaud du manche et de la soie du couteau qui comporte des moyens de serrage de la lame du couteau pour positionner et maintenir la soie du couteau en position d'assemblage, des moyens de support de deux parties de manche déplaçables entre une première position éloignée de la soie du couteau et une deuxième position rapprochée de la soie du couteau, et des moyens de chauffage des extrémités des parties de manche qui sont placés sur un côté desdits moyens de support positionnés dans ladite première position éloignée.

Selon un mode de réalisation préférentiel du dispositif conforme à l'invention, lesdits moyens de serrage comprennent une mâchoire fixe et une mâchoire mobile sous l'action d'un vérin.

Selon ce mode de réalisation préférentiel, lesdits moyens de support sont déplacés au moyen de vérins adaptés, dans ladite deuxième position rapprochée, à presser lesdites parties de manche contre la soie du couteau.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un côté de la structure d'un couteau obtenue par la mise en oeuvre de la première étape du procédé conforme à l'invention;
- la figure 2 est une vue schématique d'un côté de la structure de la figure 1 sur laquelle on a surmoulé une mitre en aluminium conformément au procédé selon l'invention ;
- la figure 3 est une vue schématique de face de la structure de la figure 2 ;
- la figure 4 est une vue schématique d'un côté de la structure de la figure 2 émoulue conformément au procédé selon l'invention ;
- la figure 5 est une vue schématique de face de la structure de la figure 4 ;
- la figure 6 est un schéma des principaux éléments du poste d'assemblage à chaud du dispositif selon l'invention ; et
- la figure 7 est une vue schématique du couteau fini obtenu par le procédé selon l'invention.

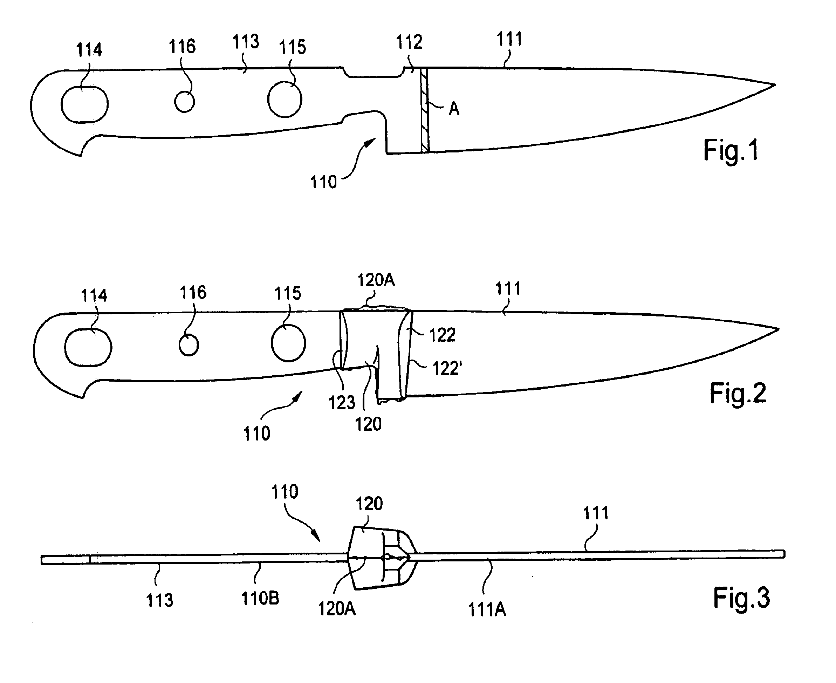

Sur les figures 1 à 6 on a représenté un couteau 100 lors des différentes étapes d'un procédé de réalisation d'un couteau à mitre en aluminium surmoulée.

La figure 1 représente plus particulièrement la structure 110 du couteau 100 obtenue par la mise en oeuvre de la première étape de ce procédé.

Lors de cette première étape, on découpe au faisceau laser un feuillard plat en acier inoxydable pour réaliser cette structure 110. Elle comprend la soie 113, la zone 112 recevant la mitre et la lame 111 du couteau 100.

Cette structure 110 présente une épaisseur A constante sur toute sa longueur.

Lors de cette étape, on découpe également au faisceau laser des ouvertures 114, 115, 116 dans la soie 113 pour la mise en place ultérieure de rivets de solidarisation du manche du couteau 100.

Avantageusement grâce au faisceau laser, on obtient une tranche de découpe parfaite sur tout le pourtour de la structure 110 du couteau 100 et il n'est pas nécessaire d'effectuer ultérieurement une opération de reprise de ce pourtour (rectification du dos 110A de la structure 110, reprise du pourtour inférieur de la soie 113 et reprise de l'arête tranchante de la lame 111).

On réduit alors considérablement le temps de la phase de finition du couteau 100.

Après cette première étape de découpage, selon le procédé représenté, on traite thermiquement ladite structure 110 pour augmenter la dureté de la lame 111 du couteau 100.

Puis, comme le montrent les figures 2 et 3, selon ce procédé, on surmoule la mitre 120 en aluminium sur la structure 110 du couteau 100 non émoulue.

Pour surmouler la mitre 120, on utilise préférentiellement le principe du moulage par gravité qui consiste à enfermer la lame 111 du couteau 100 dans un moule vertical alimenté par un opérateur qui à l'aide d'une « grosse louche » verse de l'aluminium (un alliage d'aluminium) liquide dans le moule par une ouverture supérieure.

Avantageusement, lors de cette étape de surmoulage, l'opérateur ferme le moule sur des surfaces planes de la structure 110 dont l'épaisseur A est constante du fait qu'elle n'est pas émoulue. En conséquence, cela permet de réduire considérablement le phénomène de bavure 120A de l'aluminium dans les zones de jonction entre la lame 111 du couteau et la mitre 120.

En outre, lors de cette étape, l'opérateur manipule aisément la structure 110 du couteau 100, sans risque de se couper puisque l'arête tranchante de lame 111 n'est pas formée.

Comme le montrent plus particulièrement les figures 2 et 3, en sortie de moule, les oreilles 122 de la mitre 120 surmoulée sur la structure 110 se raccordent par un angle droit 122' à la lame 111 du couteau 100.

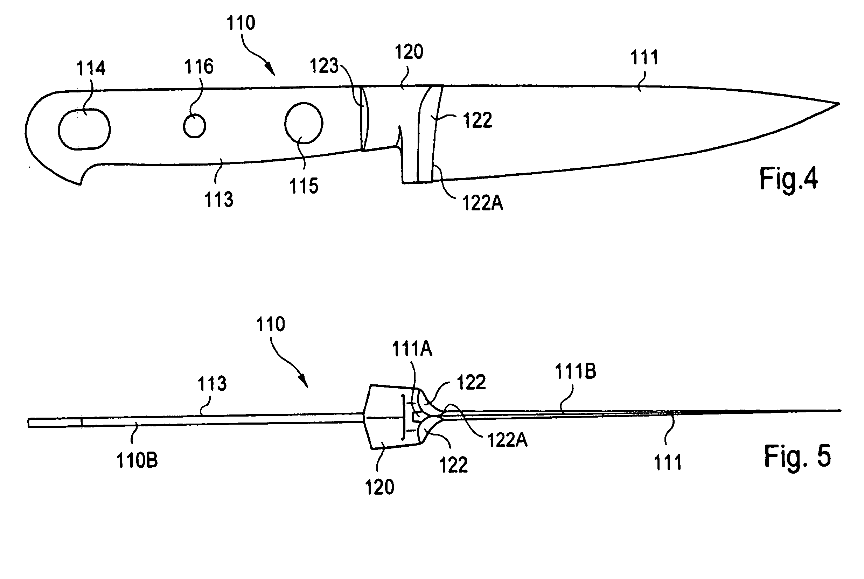

Puis selon le procédé représenté, on émoud ladite structure 110 surmoulée de la mitre 120 pour réaliser l'arête tranchante de la lame 111 du couteau 100 (voir figures 4 et 5).

Avantageusement, lors de l'étape d'émoulage de la lame 111 du couteau 100, on finalise la forme des oreilles 122 de la mitre 120 de sorte qu'elles se raccordent continûment par un arrondi 122A à la lame 111 du couteau 100 (voir figure 4 et 5).

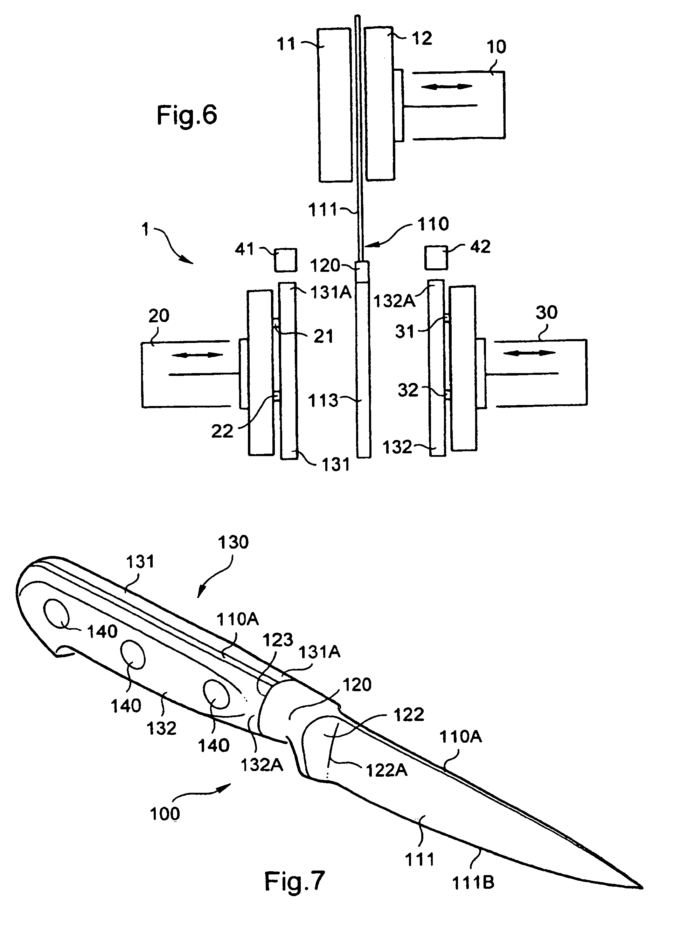

De cette manière, on obtient un couteau 100 dont l'aspect final (voir figure 7) est très proche de celui d'un couteau forgé car la forme des oreilles 122 de la mitre 120 surmoulée est semblable à celle des oreilles d'un couteau forgé.

D'ailleurs un tel couteau 100 porte la marque du procédé de fabrication puisque la face inférieure de la mitre 120 laisse apparaître après polissage la tranche épaisse de la structure non émoulue.

Le procédé comporte avantageusement une étape d'assemblage à chaud du manche 130 et de la soie 113 du couteau 100.

Comme le montre plus particulièrement la figure 6, lors de cette étape d'assemblage, on chauffe une extrémité 131A, 132A de chacune des deux parties 131, 132 du manche 130, positionnées sur des supports 21,22,31,32, sans chauffer la mitre 120 dudit couteau 100 et on presse lesdites parties 131,132 du manche 130 contre la soie 113 de sorte que lesdites extrémités 131A,132A chauffées desdites parties 131,132 du manche 130 se collent contre la face arrière 123 de la mitre 120 du couteau 100 non chauffée.

Ainsi, lors de cette étape, on fait fondre les extrémités 131A,132A concernées des parties 131,132 du manche 130 pour réaliser une jonction parfaite entre le manche 130 et la mitre 120 du couteau 100.

Après avoir assemblé à chaud le manche 130 et la soie 113 du couteau 100, on solidarise, au travers des ouvertures 114,115,116 de la soie 113, les deux parties 131,132 du manche l'une à l'autre à l'aide de rivets 140. Bien entendu pour cela les parties 131,132 du manche 130 comportent des ouvertures en correspondance des ouvertures 114,115,116 de la soie 113.

Selon une variante du procédé précité, on peut, préalablement à l'étape d'assemblage à chaud, placer dans une des deux parties du manche des éléments de rivets mâles et dans l'autre partie du manche des éléments de rivets femelles et, lorsque l'on presse lesdites parties de manche chauffées contre la soie dudit couteau, on assemble alors lesdits éléments de rivets mâles et femelles entre eux au travers de la soie pour solidariser les deux parties du manche l'une à l'autre.

Lorsque le manche 130 est solidarisé à la soie 113 du couteau 100 on réalise une étape de finition selon laquelle on polit la lame 111 puis on la rayasse, on polit les oreilles 122, on émerise et l'on polit la mitre 120 et le manche 130. Puis on affile l'arête tranchante de la lame 111 du couteau 100 pour former le fils 111 B du couteau 100.

Le dispositif 1 de mise en oeuvre comporte un poste de découpage comprenant un laser dont le faisceau est adapté à découper un feuillard selon un patron donné pour réaliser la structure du couteau.

Il comprend également un poste d'assemblage à chaud du manche et de la soie du couteau.

On a représenté ce poste sur la figure 6.

Il comporte des moyens de serrage 11,12 de la lame 111 du couteau 100 pour positionner et maintenir la soie 113 du couteau en position d'assemblage, des moyens de support 21,22,31,32 de deux parties 131,132 de manche (voir figure 6) déplaçables entre une première position éloignée de la soie 113 du couteau 100 et une deuxième position rapprochée de la soie 113 du couteau 100, et des moyens de chauffage 41,42 des extrémités 131A,132A des parties de manche qui sont placés sur un côté desdits moyens de support 21,22,31,32 positionnés dans ladite première position éloignée.

Lesdits moyens de serrage de la lame 111 du couteau 100 comprennent une mâchoire 11 fixe et une mâchoire 12 mobile sous l'action d'un vérin 10.

Lesdits moyens de support comprennent des mâchoires portant des broches 21,22,31,32 qui s'engagent ici dans les ouvertures des parties 131,132 du manche pour les supporter. Ces mâchoires sont déplacées au moyen de vérins 20,30, adaptés, dans ladite deuxième position rapprochée, à presser lesdites parties 131,132 de manche chauffées contre la soie 113 du couteau 100. Lesdits moyens de support peuvent être agencés pour prendre les parties du manche sur leur pourtour et laisser libres lesdites ouvertures des parties de manche de façon à pouvoir y engager les rivets préalablement au pressage desdites parties de manche contre la soie. De cette manière, lors du pressage des parties de manche contre la soie du couteau, on assemble les rivets pour solidariser les parties de manche l'une à l'autre.

Les moyens de chauffage sont des résistances chauffantes 41,42.

La présente invention n'est nullement limitée au mode de réalisation décrit et représenté mais l'homme du métier saura y apporter toute variante conforme à son esprit.

## Revendications

1. Procédé de réalisation d'un couteau à mitre en aluminium surmoulée, **caractérisé en ce que** :
- on surmoule la mitre (120) en aluminium sur la structure (110) du couteau non émoulue, Puis
- on émoud ladite structure surmoulée pour réaliser l'arête tranchante (111A) de la lame (111) du couteau (100), et enfin
- on affile ladite arête tranchante (111A) pour former le fil (111B) du couteau (100),

2. Procédé selon la revendication 1, **caractérisé en ce que** lors d'une première étape, on découpe au faisceau laser un feuillard pour réaliser la structure (110) du couteau à savoir la soie (113), la zone (112) recevant la mitre et la lame (111).

3. Procédé selon l'une revendications 1 ou 2, **caractérisé en ce qu'**il comporte une étape d'assemblage à chaud du manche (130) et de la soie (113) du couteau consistant à chauffer une extrémité (131A,132A) de deux parties (131,132) du manche sans chauffer la mitre (120) dudit couteau (100) et à presser lesdites parties (131,132) du manche contre la soie (113) de sorte que lesdites extrémités (131A,132A) chauffées desdites parties (131,132) du manche se collent contre la face arrière (123) de la mitre (120) du couteau non chauffée.

4. Procédé selon la revendication 3, **caractérisé en ce qu'**après avoir assemblé à chaud le manche et la soie du couteau, on solidarise, au travers de la soie, les deux parties (131,132) du manche l'une à l'autre à l'aide de rivets (140).

5. Procédé selon la revendication 3, **caractérisé en ce que**, préalablement à l'étape d'assemblage à chaud, on place dans une des deux parties du manche des éléments de rivets mâles et dans l'autre partie du manche des éléments de rivets femelles et, lorsque l'on presse lesdites parties de manche chauffées contre la soie dudit couteau on assemble lesdits éléments de rivets mâles et femelles entre eux au travers de la soie pour solidariser les deux parties du manche l'une à l'autre.

6. Procédé selon l'une des revendications 1 à 5, **caractérisé en ce que** lors de l'étape d'émoulage de la lame du couteau, on finalise la forme des oreilles (122) de la mitre de sorte qu'elle se raccordent continûment par un arrondi (122A) à la lame (111) du couteau.

7. Dispositif de mise en oeuvre du procédé selon l'une quelconque des revendications précédentes, **caractérisé en ce qu'**il comporte un poste de découpage comprenant un laser dont le faisceau est adapté à découper un feuillard selon un patron donné pour réaliser la structure du couteau.

8. Dispositif selon la revendication 7, **caractérisé en ce qu'**il comprend un poste d'assemblage à chaud du manche et de la soie du couteau qui comporte des moyens de serrage (11,12) de la lame (111) du couteau pour positionner et maintenir la soie du couteau en position d'assemblage, des moyens de support (21,22,31,32) de deux parties de manche déplaçables entre une première position éloignée de la soie du couteau et une deuxième position rapprochée de la soie du couteau, et des moyens de chauffage (41,42) des extrémités des parties de manche qui sont placés sur un côté desdits moyens de support positionnés dans ladite première position éloignée.

9. Dispositif selon la revendication 8, **caractérisé en ce que** lesdits moyens de serrage comprennent une mâchoire (11) fixe et une mâchoire (12) mobile sous l'action d'un vérin (10).

10. Dispositif selon l'une des revendications 8 ou 9, **caractérisé en ce que** lesdits moyens de support (21,22,31,32) sont déplacés au moyen de vérins (20,30) adaptés, dans ladite deuxième position rapprochée, à presser lesdites parties de manche contre la soie du couteau.

## Claims

1. A method of making a knife with a bolster out of overmolded aluminum, the method being **characterized by**:
- overmolding the aluminum bolster (120) on the structure (110) of the non-sharpened knife; then
- sharpening said overmolded structure to make the cutting edge (111A) of the blade (111) of the knife (100); and finally
- touching up said cutting edge (111A) to form the knife edge (111B) of the knife (100).

2. A method according to claim 1, **characterized in that** during a first step, a metal sheet is cut by a laser beam to make the structure (110) of the knife, i.e. the tang (113), the zone (112) that receives the bolster and the blade (111).

3. A method according to claim 1 or claim 2, **characterized in that** it includes a step of hot assembling the handle (130) to the tang (113) of the knife, said step consisting in heating one end (131A, 132A) of each of two handle portions (131, 132) without heating the bolster (120) of said knife (100), and in pressing said handle portions (131, 132) against the tang (113) so that said heated ends (131A, 132A) of said handle portions (131, 132) bond against the rear face (123) of the bolster (120) of the non-heated knife.

4. A method according to claim 3, **characterized in that** after hot assembling the handle and the tang of the knife, the two portions (131, 132) of the handle are assembled together through the tang by using rivets (140).

5. A method according to claim 3, **characterized in that** prior to the hot assembly step, male rivet elements are placed in one of the two handle portions and female rivet elements are placed in the other handle portion, and when said heated handle portions are pressed against the tang of said knife, said male and female rivet elements are assembled together through the tang so as to secure the two handle portions to each other.

6. A method according to any one of claims 1 to 5, **characterized in that** during the step of sharpening the knife blade, the final shape is given to the lugs (122) of the bolster so that they connect continuously via a rounded portion (122A) with the blade (111) of the knife.

7. A device for implementing the method according to any preceding claim, **characterized in that** it includes a cutting-out station including a laser having a beam that is adapted to cut out a metal sheet with a given pattern for making the structure of the knife.

8. A device according to claim 7, **characterized in that** it includes a station for hot assembling the handle and the tang of the knife, which station includes clamping means (11, 12) for clamping the blade (111) of the knife in order to position and hold the tang of the knife in an assembly position, support means (21, 22, 31, 32) for supporting the two handle portions and movable between a first position remote from the tang of the knife and a second position close to the tang of the knife, and heater means (41, 42) for heating the ends of the handle portions that are placed on a side of said support means when they are positioned in said remote first position.

9. A device according to claim 8, **characterized in that** said clamping means comprise a stationary jaw (11) and a movable jaw (12) that is movable under drive from a jack (10).

10. A device according to claim 8 or claim 9, **characterized in that** said support means (21, 22, 31, 32) are moved by means of jacks (20, 30) that, into said second position close to the tang, are able to press said handle portions against the tang of the knife.

## Patentansprüche

1. Herstellungsverfahren eines Messers mit umspritztem Kropf aus Aluminium, **dadurch gekennzeichnet, dass**:
- man den Kropf (120) aus Aluminium auf der nicht abgeschliffenen Grundstruktur (110) des Messers umspritzt,
- man dann die umspritzte Grundstruktur abschleift, um die Schnittkante (111A) der Messerklinge (Messer 100, Klinge 111) herzustellen, und man schließlich
- die Schnittkante (111A) abzieht, um die Wate (111B) des Messers (100) zu bilden.

2. Verfahren nach Anspruch 1, **dadurch gekennzeichnet, dass** man während einer ersten Etappe mit einem Laserstrahl einen Bandstahl zuschneidet, um die Grundstruktur (110) des Messers zu bilden, d. h. den Klingenerl (113), den Bereich (112) für den Kropf und die Klinge (111).

3. Verfahren nach Anspruch 1 oder 2, **dadurch gekennzeichnet, dass** es eine Etappe des Warmfügens des Griffes (130) und des Klingenerls (113) des Messers umfasst, die darin besteht ein Ende (131A,132A) von zwei Abschnitten (131,132) des Griffes zu erhitzen, ohne den Kropf (120) des Messers (100) zu erhitzen und diese Abschnitte (131,132) des Griffes derart gegen den Klingenerl (113) zu pressen, dass die erhitzten Enden (131A.132A) der Abschnitte (131,132) des Griffes auf der nicht erhitzten Rückseite (123) des Kropfes (120) des Messers festhaften.

4. Verfahren nach Anspruch 3, **dadurch gekennzeichnet, dass** man nach dem Warmfügen von Griff und Klingenerl des Messers die beiden Abschnitte (131,132) des Griffes durch den Klingenerl miteinander durch Nieten (140) verbindet.

5. Verfahren nach Anspruch 3, **dadurch gekennzeichnet, dass** man vor dem Warmfügen in einen der beiden Abschnitte des Griffes Steckelemente von Nieten und in den anderen Abschnitt des Griffes Aufnahmeelemente von Nieten anbringt und man, wenn man die erhitzten Griffabschnitte gegen den Klingenerl des Messers presst, diese Steck- und Aufnahmeelemente der Nieten durch den Klingenerl miteinander verbindet, um die beiden Abschnitte des Griffes fest miteinander zu verbinden.

6. Verfahren nach einem der Ansprüche 1 bis 5, **dadurch gekennzeichnet, dass** man beim Abschleifen der Messerklinge die Form der Kantenseiten (122) des Kropfes derart endbearbeitet, dass sich der Kropf abgerundet (122A) an die Klinge (111) des Messers anschließt.

7. Vorrichtung zur Anwendung des Verfahrens nach einem beliebigen der vorausgehenden Ansprüche, **dadurch gekennzeichnet, dass** sie eine Zuschnittstation mit einem Laser umfasst, dessen Strahl zum Zuschneiden eines Bandstahls gemäß einem für die Herstellung der Messergrundstruktur bereitgestellten Modell geeignet ist.

8. Vorrichtung nach Anspruch 7, **dadurch gekennzeichnet, dass** sie eine Station zum Warmfügen des Griffes und des Klingenerls umfasst, die wiederum Einspannmittel (11,12) für die Klinge (111) des Messers zum Positionieren und Halten des Klingenerls in der Montageposition, zwischen einer ersten, vom Klingenerl entfernten und einer zweiten, dem Klingenerl nahen Position verschiebbare Haltemittel (21,22,31,32) für die beiden Griffabschnitte, sowie Mittel zum Erhitzen (41,42) der Enden der Griffabschnitte, die auf einer Seite der in der ersten entfernten Position angeordneten Haltemittel angeordnet sind, umfasst.

9. Vorrichtung nach Anspruch 8, **dadurch gekennzeichnet, dass** die Einspannmittel eine unter Wirkung eines Zylinders (10) feste Spannbacke (11) und eine mobile Spannbacke (12) umfassen.

10. Vorrichtung nach einem der Ansprüche 8 oder 9, **dadurch gekennzeichnet, dass** die Haltemittel (21,22,31,32) durch Zylinder (20, 30) verschoben werden, die dazu geeignet sind, in der zweiten, nahen Position die Griffabschnitte gegen den Klingenerl des Messers zu pressen.
